Europäisches Patentamt

European Patent Office

Office européen des brevets

(11) Veröffentlichungsnummer: **0 210 504**
**B1**

(12) EUROPÄISCHE PATENTSCHRIFT

(45) Veröffentlichungstag der Patentschrift: **04.04.90**

(21) Anmeldenummer: **86109520.6**

(22) Anmeldetag: **11.07.86**

(51) Int. Cl.⁵: **B 32 B 3/12,** B 32 B 31/30, B 29 C 69/00, B 29 C 47/06, B 29 D 24/00

(54) **Verfahren und Vorrichtung zur Herstellung einer Hohlkammerplatte aus Kunststoff.**

(30) Priorität: **26.07.85 DE 3526752**

(43) Veröffentlichungstag der Anmeldung:
**04.02.87 Patentblatt 87/06**

(45) Bekanntmachung des Hinweises auf die Patenterteilung:
**04.04.90 Patentblatt 90/14**

(84) Benannte Vertragsstaaten:
**AT BE DE FR GB IT NL SE**

(56) Entgegenhaltungen:
**DE-A-2 230 901**
**DE-A-3 238 370**
**DE-B-1 195 476**
**GB-A-1 325 017**
**US-A-3 673 032**

(73) Patentinhaber: **Röhm GmbH**
**Kirschenallee Postfach 4242**
**D-6100 Darmstadt 1 (DE)**

(72) Erfinder: **Gross, Heinz, Dr.-Ing.**
**Am Erlenbusch 2**
**d-6109 Mühltal (DE)**

EP 0 210 504 B1

## Beschreibung

Die Erfindung betrifft ein Verfahren und eine Vorrichtung zur Herstellung einer Hohlkammerplatte aus Kunststoff durch Vereinigen von zwei ebenen Schichten aus Kunststoff mit einer Vielzahl von senkrecht dazwischen angeordneten Stegen.

### Stand der Technik

Hohlkammerplatten aus Kunststoff werden überwiegend einstückig durch Extrusion hergestellt, vgl. DE—OS 15 04 800, 16 09 777. Aus der CH—PS 457 829 und der DE—OS 32 38 370 ist es bekannt, durch oszillierend angeordnete Kernstücke in der Extrusionsdüse Hohlkammerplatten mit paralle zueinander gewellten Stegen zu extrudieren. Durch nachträgliche Expansion einer mit schwankenden Außenwanddicken extrudierten Hohlkammerplatte gelingt es gemäß DE—OS 25 36 462 auch, Hohlkammerplatten mit gegensinnig gewellten Stegen einstückig herzustellen. Nach DE—OS 20 50 969 erhält man Hohlkammerplatten mit schräg zur Extrusionsrichtung verlaufenden Stegen durch gleichzeitige Extrusion einer glatten Kunststoffschicht und einer zweiten Kunststoffschicht mit senkrecht darauf stehenden, schräg zur Extrusionsrichtung verlaufenden Stegen und Vereinigen der beiden Schichten im thermoplastischen Zustand. Bei diesem Verfahren verlaufen die Stege parallel zueinander.

Gemäß DE—PS 20 27 836 wird eine glatte Kunststoffschicht mit einer zweiten Schicht, die senkrecht dazu stehende, vorzugsweise in einem Kreuzraster angeordnete Stege aufweist, nach dem Aufschmelzen der Stegköpfe verbunden.

Das Verfahren gemäß DE—PS 25 56 016 gestattet die Herstellung von Hohlkammerplatten mit beliebig angeordneten Stegen, indem getrennt erzeugte Deckschichten und Stege miteinander verklebt werden.

Aus der DE—A 22 30 901 ist ein Verfahren zur Herstellung einer Hohlkammerplatte bekannt, bei dem eine Trennwand mit beiderseits abstehenden Stegen erzeugt und abgekühlt wird und anschließend Deckschichten aus thermoplastischem Kunststoff auf die Kanten der Stege aufgelegt und mit diesen verschweißt werden. Bei diesem Verfahren entsteht eine dreischichtige Hohlkammerplatte, in der die Stellung der Stege durch ihre Anordnung an der mittleren Trennwand festgelegt ist.

### Aufgabe und Lösung

Der Erfindung liegt die Aufgabe zugrunde, eine Hohlkammerplatte aus Kunststoff ohne mittlere Trennwand aus Kunststoff durch Vereinigen von zwei ebenen Schichten mit einer Vielzahl von senkrecht dazwischen angeordneten durchlaufenden Stegen durch ein vereinfachtes Verfahren zu erzeugen. Das Verfahren soll beliebige Anordnungen der durchlaufenden Stege zulassen und ohne zusätzliche Hilfsstoffe zum Verbinden der Stege mit den Schichten ausführbar sein.

Die Aufgabe wird durch das Verfahren und die Vorrichtung gemäß den Ansprüchen gelöst.

### Vorteile der Erfindung

Das erfindungsgemäße Verfahren und die erfindungsgemäße Vorrichtung gestatten jede beliebige Anordnung der Stege, beispielsweise auch einen Verlauf mit in Längsrichtung wechselnden Abständen bis zur gegenseitigen Berührung der Stege.

Das Verfahren arbeitet ohne Klebstoff oder andere Hilfsstoffe zum Verbinden der Stege mit den Deckschichten. Bei einer bevorzugten Ausführungsform werden die thermoplastischen Schichten unmittelbar vor dem Verbinden mit den Stegen durch Extrusion erzeugt, so daß zusätzliche Heizvorrichtungen zum Erreichen des thermoplastischen Zustands nicht benötigt werden.

### Anwendung des Verfahrens

Das Verfahren der Erfindung kann z.B. zur Herstellung von Hohlkammerplatten mit geradlinig parallelen oder gewellt parallelen Stegen angewendet werden. Im Gegensatz zu den bekannten Verfahren, bei denen die Stege durch einstückige Extrusion mit den Deckschichten erzeugt werden, können erfindungsgemäß die Stege und die Deckschichten aus unterschiedlichen Kunststoffmaterialien bestehen, sofern diese unter den Verfahrensbedingungen miteinander verschweißen. Das gilt z.B. für unterschiedlich gefärbte oder mit sonstigen unterschiedlichen Zusätzen ausgerüstete Stege und Deckschichten aus sonst gleichem Kunststoffmaterial.

Ebenso können Stege mit einer durch Extrusion nicht erzeugbaren Feinstruktur, z.B. einer feinen Wellung oder Fältelung, verarbeitet werden.

Durch die erfindungsgemäß mögliche Anordnung der Stege in wechselnden Abständen, insbesondere durch wechselnde Berührung oder Annäherung der zwischen den Randstegen angeordneten Stege mit ihren jeweiligen Nachbarstegen, kann eine erhebliche Quersteifigkeit der Hohlkammerplatte erreicht werden.

Für das Verfahren werden vorgefertigte Stege und Deckschichten eingesetzt, wobei es vorteilhaft ist, die Deckschichten unmittelbar zuvor durch Extrusion zu erzeugen und noch im thermoplastischen Zustand mit den Stegen zu verbinden. Auch die Stege können durch Extrusion hergestellt sein, jedoch geschieht dies vorzugsweise unabhängig vom Verfahren der Erfindung. Beispielsweise kann für jeden Steg vorgefertigtes Bandmaterial von je einer Vorratsrolle entnommen werden.

Die Deckschichten und Stege bestehen aus thermoplastischen Kunststoffen, vorzugsweise mit Schmelztemperaturen zwischen 100 und 450°C. Geeignet sind z.B. Acrylglas, d.h. Homo- und Mischpolymerisate des Methylmethacrylats, Polystyrol, Polyolefine, Polyvinylchlorid, Polycarbonate, Polysulfone, Polyester, Polyamide, Polyphenylenoxid u. dergl.. Die Deckschichten und Stege haben in der Regel gleiche oder ähnliche Dicken im Bereich von 0,5 bis 2 mm. Die Stege können z.B. 5 bis 50 mm hoch sein und durchschnittliche Abstände in der gleichen Größenordnung haben. Die Deckschichten haben üblicherweise Breiten zwischen 0,5 und 2 m.

Kurze Beschreibung der Zeichnungen

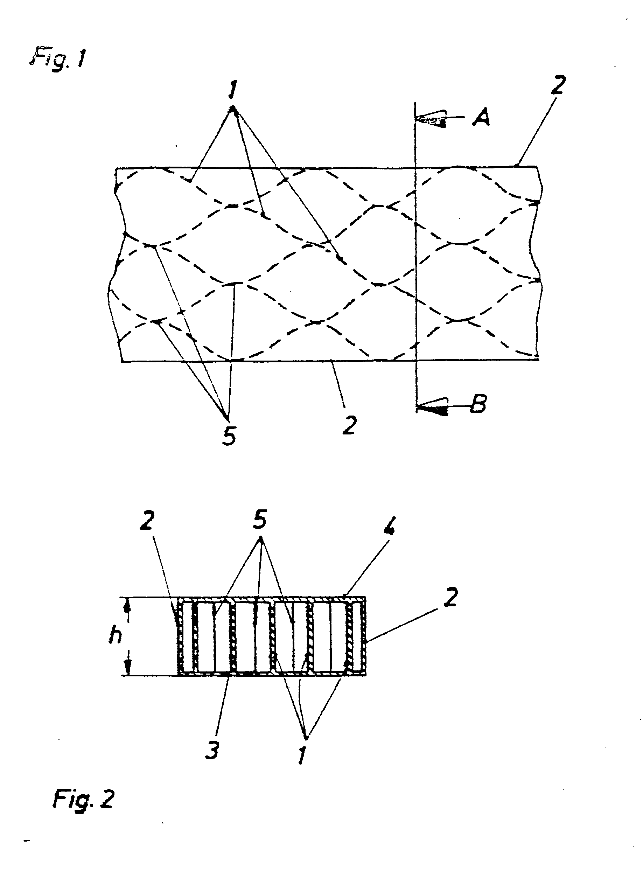

Figur 1 zeigt in Aufsicht eine nach dem Verfahren der Erfindung hergestellte Hohlkammerplatte, in der die Randstege geradlinig und die inneren Stege abwechselnd gegensinnig gewellt angeordnet sind.

Figur 2 zeigt die Sicht auf die längs der Linie AB gelegte Schnittfläche durch die in Figur 1 dargestellte Hohlkammerplatte.

Figur 3 zeigt einen schematischen Querschnitt durch eine Vorrichtung zur kontinuierlichen Durchführens des Verfahrens der Erfindung.

Figur 4 zeigt eine weitere Ausführungsform einer solchen Vorrichtung.

Figur 5 zeigt in Draufsicht einen Teil der in den Figuren 3 und 4 schematisch dargestellten Vorrichtung.

Figur 6 zeigt einen Ausschnitt aus der in Figur 5 gezeigten Vorrichtung längs der Schnittlinie CD in Figur 5.

Die Erfindung wird nachfolgend am Beispiel einer bevorzugten Ausführungsform erläutert, bei der Hohlkammerplatten mit abwechselnd gegensinnig gewellten Stegen 1 erzeugt werden. Die Randstege 2 verlaufen vorzugsweise geradlinig. Alle Stege haben die gleiche Höhe h und sind mit ebenen Deckschichten 3 und 4 verbunden. An den Kulminationspunkten 5 berühren sich benachbarte Stege. Die Ausführungen gelten für andere Ausgestaltungen in entsprechender Weise.

Nach dem erfindungsgemäßen verfahren werden zunächst sämtliche Stege, die mit einer Deckschicht verbunden werden sollen, in die gewünschte Stellung gebracht und vorübergehend mit geeigneten Haltemitteln fixiert. Dann wird auf die oberen Stegkanten eine thermoplastische Deckschicht aufgebracht und mit diesen verschweißen gelassen. Nach dem Abkühlen sind die Stege an der Deckschicht fixiert, so daß die vorübergehende Fixierung aufgehoben werden kann und (vorzugsweise in einem weiteren Arbeitsgang) die unteren Stegkanten mit der zweiten Deckschicht in der gleichen Weise verbunden werden können.

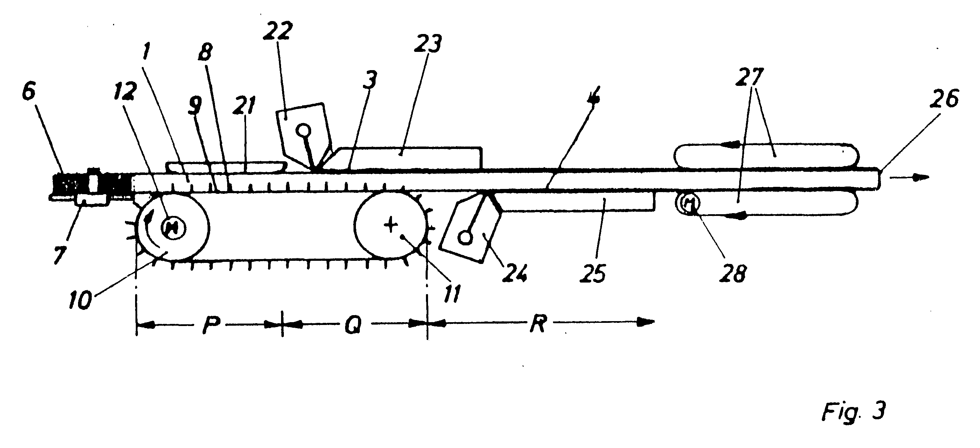

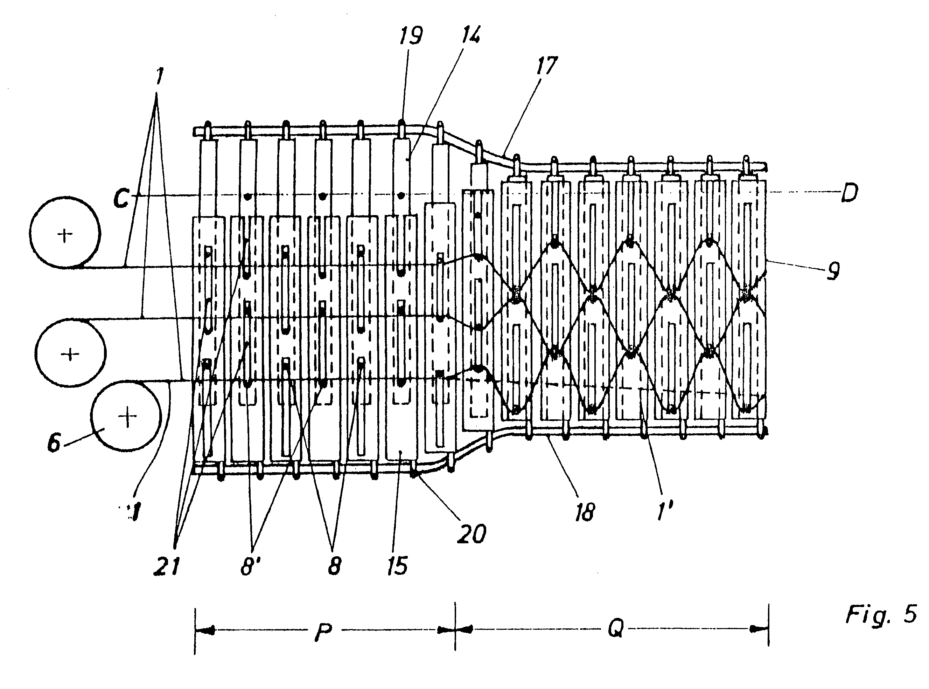

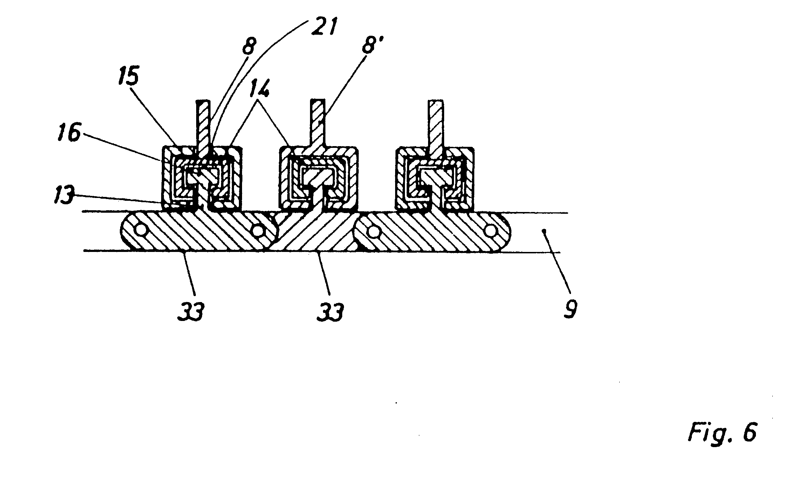

In der in Figur 3 dargestellten Vorrichtung dient die mit Sortiernadeln 8 versehene Schieberkette 9 zur vorläufigen Fixierung der kontinuierlich von Vorratsrollen 6 abgerollten Stege 1. Auf einem Rollenträger 7 ist eine der gewünschten Stegzahl entsprechende Anzahl von Vorratsrollen 6 drehbar angebracht. Die Funktion und Arbeitsweise der Schieberkette 9 geht aus den Figuren 5 und 6 hervor. Die aus Kettengliedern 33 zusammengesetzte Kette 9 läuft über Zahnradführungen 10, 11 langsam in Extrusionsrichtung, wobei die Geschwindigkeit des Antriebs 12 so eingestellt wird, daß die Kette mit Extrusionsgeschwindigkeit umläuft. Die Kettenglieder 33 tragen Fortsätze 13, an denen Schieber 14, 15 quer zur Bewegungsrichtung verschiebbar angeordnet sind. Zweckmäßig tragen die Fortsätze 13 verbreiterte Köpfe 16, welche von dem Schieber 14, der ein eingezogenes U-Profil hat, umfaßt wird. Der Schieber 15 mit einem gleichartigen, aber größeren Profil umfaßt den Schieber 14. Die seitliche Bewegung der Schieber 14, 15 wird durch Leitschienen 17, 18 gesteuert. Am Ende des Schiebers 14 ist eine Klaue 19 angeordnet, die über die Leitschiene 17 greift, so daß der Schieber 14 stets der Kontur der Leitschine 17 folgt. In gleicher Weise wird der Schieber 15 mittels der Klaue 20 an der Leitschiene 18 geführt. Die Schieber 14 tragen Dorne 8, welche durch Schlitze 21 in den Schiebern 15 nach außen ragen. Auch die Schieber 15 tragen Dorne 8'. Die Dorne 8 und 8' sind auf den Schiebern 14 und 15 so angeordnet, daß sie bei gespreizter Stellung der Schieber im Bewegungsbereich P der Kette 9 jeweils beidseitig der geradlinig einlaufenden Stege 1 stehen. Beim Zusammenfahren der Schieber 14, 15 im Bewegungsbereich Q der Kette 9 bewegen sich die Dorne 8 bzw 8' gegenläufig über die (gestrichelt gezeichnete) Einlaufinie 1' der Stege 1 hinweg, wodurch der Steg einen wellenförmigen Verlauf annimmt. Der Niederhalter 21 verhindert das Abheben der Stege aus der Nadelfixierung durch die Dorne 8, 8'.

Im Bereich Q wird mittels des Extrusionsbreitschlitzwerkzeuges 22 die obere Deckschicht 3 auf die wellenförmig sortierten Stege 1 aufgelegt und an dem Kalibrator 23, der die Deckschicht 3 mittels Vakuum ansaugt, unter die Erweichungstemperatur gekühlt. Nach Ablösung der Stege von der Kette 9 wird im anschließenden Bereich R mit einem zweiten Extrusionsbreitschlitzwerkzeug 24 die zweite Deckschicht 4 aufgebracht und am Kalibrator 25 gekühlt. Die fertige Hohlkammerbahn 26 wird mittels der Abzugsvorrichtung 27, bestehend aus einem Walzenpaar oder einem Doppelband, mittels der Antriebsvorrichtung 28 gleichförmig entsprechend der Extrusionsgeschwindigkeit abgezogen.

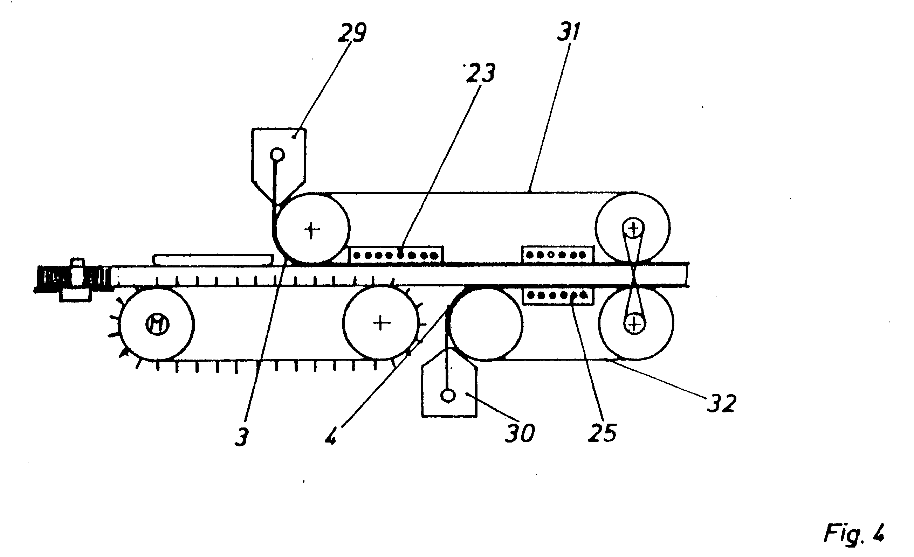

In der Vorrichtung gemäß Figur 4 werden die Deckschichten 3 und 4 nicht direkt aus den Breitschlitzwerkzeugen 29, 30 auf die Stegkanten, sondern auf kontinuierlich umlaufende, auf die Schmelztemperatur beheizte Endlosbänder 31, 32 (vorzugsweise aus poliertem Stahl) aufgetragen, von wo sie auf die Stegkanten übertragen werden. Die Kalibratoren 23 und 25 wirken mittelbar über die Endlosbänder 31, 32 auf die extrudierten Deckschichten 3, 4 ein. Die Endlosbänder übernehmen gleichzeitig die Funktion der Abzugsvorrichtung. Man enthält bei dieser Verfahrensvariante Hohlkammerplatten von besonders guter Oberflächenqualität.

**Patentansprüche**

1. Verfahren zur Herstellung einer Hohlkammerplatte aus Kunststoff durch Vereinigen von zwei, in thermoplastischem Zustand befindlichen ebenen Deckschichten aus Kunststoff mit einer Vielzahl von dazwischen angeordneten Stegen, bei dem die Stege bei einer Temperatur unterhalb ihrer Erweichungstemperatur mit den Deckschichten in Berührung gebracht werden, dadurch gekennzeichnet,

daß zunächst sämtliche Stege, die mit einer Deckschicht verbunden werden sollen, in die gewünschte Stellung gebracht und vorübergehend mit geeigneten Haltemitteln fixiert werden;

daß auf die freiliegenden Kanten der fixierten Stege eine erste thermoplastische Deckschicht aufgebracht und mit diesen verschweißen gelassen wird;

daß die Deckschicht unter die Erweichungstemperatur gekühlt wird;

daß die vorübergehende Fixierung der nunmehr nach dem Abkühlen an der Deckschicht fixierten Stegen aufgehoben wird; und

daß die anderen Kanten der Stege mit der zweiten Deckschicht in der gleichen Weise wie mit der ersten Deckschicht verbunden werden.

2. Verfahren nach Anspruch 1, dadurch gekennzeichnet, daß die Deckschichten aus Breitschlitzwerkzeugen auf kontinuierlich umlaufende Endlosbänder aufgetragen und von diesen auf die Stegkanten übertragen werden.

3. Verfahren nach Anspruch 2, dadurch gekennzeichnet, daß die Deckschichten auf Endlosbänder aufgetragen werden, die auf die Schmelztemperatur des Kunststoffes erhitzt sind.

4. Verfahren nach den Ansprüchen 1 bis 3, dadurch gekennzeichnet, daß die thermoplastischen Schichten unmittelbar vor der Verbindung mit den Stegen durch Extrusion erzeugt werden.

5. Verfahren nach den Ansprüchen 1 bis 4, dadurch gekennzeichnet, daß die Stege mit in Längsrichtung wechselnden gegenseitigen Abständen angeordnet werden.

6. Verfahren nach Anspruch 5, dadurch gekennzeichnet, daß die zwischen den Randstegen angeordneten Stege wechselweise mit ihren jeweiligen benachbarten Stegen in Berührung oder auf einen geringen Abstand gebracht werden.

7. Vorrichtung zur kontinuierlichen Durchführung des Verfahrens gemäß den Ansprüchen 1 bis 6, gekennzeichnet durch:

a) eine Vorrichtung zur kontinuierlichen Zuführung vorgefertigter Stege,

b) eine Sortiervorrichtung zur vorübergehenden Fixierung der Stege in einer gewünschten Anordnung und zum Transport der fixierten Stege in der Arbeitsrichtung,

c) ein erstes Extrusionsbreitschlitzwerkzeug zur Erzeugung einer ersten extrudierten Deckschicht,

d) eine erste Kalibriervorrichtung zur Kühlung der extrudierten Deckschicht in Berührung mit den freiliegenden Kanten der sortierten Stege,

e) ein zweites Extrusionsbreitschlitzwerkzeug zur Erzeugung einer zweiten extrudierten Deckschicht, angeordnet in Arbeitsrichtung hinter dem Ende der Sortiervorrichtung,

f) eine zweite Kalibriervorrichtung zur Kühlung der zweiten extrudierten Deckschicht in Berührung mit den anderen Kanten der Stege,

g) eine Abzugsvorrichtung zum Transportieren der bei dem Verfahren erzeugten Hohlkammerplatte.

8. Vorrichtung nach Anspruch 7, dadurch gekennzeichnet, daß im Bereich des Auflegepunktes der ersten Deckschicht und der ersten Kalibriervorrichtung sowie im Bereich des Auflagepunktes der zweiten Deckschicht und der zweiten Kalibriervorrichtung jeweils ein endlos umlaufendes Band angeordnet ist und daß das erste und zweite Extrusionsbreitschlitzwerkzeug so angeordnet sind, daß die extrudierten Deckschichten jeweils auf eines der endlos umlaufenden Bänder aufgelegt werden und mit diesem in den Spalt zwischen den Stegkanten und Kalibriervorrichtungen einlaufen.

9. Vorrichtung nach den Ansprüchen 7 oder 8, dadurch gekennzeichnet, daß die Sortiervorrichtung aus einer endlos umlaufenden Gliederkette besteht, deren Glieder wenigstens etwa die Breite der herzustellenden Hohlkammerbahn haben und an ihrer Außenseite Leitelemente aufweisen, durch deren Betätigung die Stege in einer gewünschten Anordnung fixierbar sind.

10. Vorrichtung nach Anspruch 9, dadurch gekennzeichnet, daß die Glieder der Gliederkette quer zur Bewegungsrichtung der Kette verschiebbare Leitelemente aufweisen.

11. Vorrichtung nach Anspruch 10, dadurch gekennzeichnet, daß die Glieder zwei gegenläufige Gruppen von quer verschiebbaren Leitelementen aufweisen.

## Revendications

1. Procédé de fabrication d'une plaque alvéolaire en matière plastique par union de deux couches extérieures planes en matière plastique se trouvant à l'état thermoplastique avec une multiplicité d'entretoises disposées entre ces couches, les entretoises étant mises en contact avec les couches extérieures à une température inférieure à leur température de ramollissement, caractérisé en ce que toutes les entretoises qui doivent être unies à une couche extérieure sont d'abord mises dans la position désirée et fixées provisoirement avec des moyens de maintien appropriés, en ce qu'une première couche extérieure thermoplastique est placée sur les arêtes libres des entretoises fixées et on la laisse se souder à celles-ci, en ce que la couche extérieure est refroidie au-dessous de la température de ramollissement, en ce que la fixation provisoire des entretoises, désormais fixées à la couche extérieure à la suite du refroidissement, est supprimée, et en ce que les autres arêtes des entretoises sont unies à la seconde couche extérieure, de la même manière qu'avec la première couche extérieure.

2. Procédé selon la revendication 1, caractérisé en ce que les couches extérieures issues d'outils à filière plate sont étendues sur des bandes sans fin circulant en continu et sont transférées à partir de celles-ci sur les arêtes des entretoises.

3. Procédé selon la revendication 2, caractérisé en ce que les couches extérieures sont étendues sur des bandes sans fin qui sont chauffées à la température de fusion de la matière plastique.

4. Procédé selon l'une quelconque des revendications 1 à 4, caractérisé en ce que les couches thermoplastiques sont produites par extrusion immédiatement avant leur union aux entretoises.

5. Procédé selon l'une quelconque des revendications 1 à 4, caractérisé en ce que les entretoises sont disposées à des distances mutuelles qui varient en direction longitudinale.

6. Procédé selon la revendication 5, caractérisé en ce que les entretoises disposées entre les entretoises bordantes sont mises alternativement au contact ou à faible distance des entretoises qui leur sont respectivement voisines.

7. Dispositif pour l'exécution en continu du procédé selon l'une quelconque des revendications 1 à 6, caractérisé par:

a) un dispositif d'alimentation continue en entretoises préfabriquées;

b) un dispositif de triage pour la fixation provisoire des entretoises dans une disposition désirée et pour le transport des entretoises fixées dans la direction de travail;

c) un premier outil d'extrusion à filière plate pour la production d'une première couche extérieure extrudée;

d) un premier dispositif de calibrage pour le refroidissement de la couche extérieure extrudée au contact des arêtes libres des entretoises triées;

e) un second outil d'extrusion à filière plate pour la production d'une seconde couche extérieure extrudée, disposée en aval de l'extrémité du dispositif de triage dans la direction de travail;

f) un second dispositif de calibrage pour le refroidissement de la seconde couche extérieure extrudée au contact des autres arêtes des entretoises;

g) un dispositif de déchargement pour le transport de la plaque alvéolaire produite par le procédé.

8. Dispositif selon la revendication 7, caractérisé en ce que des bandes qui circulent sans fin sont disposées respectivement dans la région du point d'application de la première couche extérieure et du premier dispositif de calibrage, ainsi que dans la région du point d'application de la seconde couche extérieure et du second dispositif de calibrage, et en ce que le premier et le second outils d'extrusion à filière plate sont disposés de telle manière que chacune des couches extérieures extrudées soit étendue sur l'une des bandes circulant sans fin et qu'elle pénètre avec celle-ci dans la fente entre les arêtes des entretoises et le dispositif de calibrage correspondant.

9. Dispositif selon la revendication 7 ou 8, caractérisé en ce que le dispositif de triage est constitué par une chaîne à maillons circulant sans fin, dont les maillons ont au moins à peu près la largeur de la plaque alvéolaire à fabriquer et présentent, sur leur côté extérieur, des éléments directeurs par l'actionnement desquels les entretoises peuvent être fixées dans une disposition désirée.

10. Dispositif selon la revendication 9, caractérisé en ce que les maillons de la chaîne à maillons présentent des éléments directeurs mobiles transversalement par rapport à la direction de mouvement de la chaîne.

11. Dispositif selon la revendication 10, caractérisé en ce que les maillons présentent deux groupes d'éléments directeurs mobiles transversalement en sens opposés.

**Claims**

1. Process for the manufacture of a hollow chamber plate from plastic by joining two flat plastic cover layers in the thermoplastic state with a number of webs arranged between them, in which the webs are contacted with the cover layers at a temperature below their softening temperature, characterised in that initially all webs which are to be connected to a cover layer, are introduced into the required position and fixed temporarily with suitable retaining agents;

in that a first thermoplastic cover layer is introduced onto the exposed edges of the fixed webs and is allowed to weld with them;

in that the cover layer is cooled below the softening temperature;

in that the temporary fixing means is removed from the webs now fixed to the cover layer after cooling; and

in that the outer edges of the webs are bonded to the second cover layer in the same way as to the first cover layer.

2. Process according to claim 1, characterised in that the cover layers from sheets dies are applied to continuously circulating continuous belts, and are transferred from these to the edges of the web.

3. Process according to claim 2, characterised in that the cover layers are applied to continuous belts, which are heated to the melting temperature of the plastic.

4. Process according to claims 1 to 3, characterised in that the thermoplastic layers are produced by extrusion directly before bonding to the webs.

5. Process according to claims 1 to 4, characterised in that the webs are arranged at distances mutually alternating in the longitudinal direction.

6. Process according to claim 5, characterised in that the webs arranged between the edge webs are alternately brought into contact with or at a slight distance to their particular neighbouring webs.

7. Device for carrying out the process according to claims 1 to 6 continuously, characterised by:

a) a device for continuously feeding pre-prepared webs,

b) a collating device for temporarily fixing the webs in a required arrangement and for transporting the fixed webs in the direction of working,

c) a first extrusion sheet die to produce a first extruded cover layer,

d) a first calibrating device for cooling the extruded cover layer in contact with the exposed edges of the collated webs,

e) a second extrusion sheet die to produce a second extruded cover layer, arranged in the direction of working behind the end of the collating device,

f) a second calibrating device for cooling the second extruded cover layer in contact with the other edges of the webs,

g) a discharge device for transporting the hollow chamber plate produced in the process.

8. Device according to claim 7, characterised in that a continuously circulating belt is arranged in each case in the region of the application point of the first cover layer and of the first calibrating device and in the region of the application point of the second cover layer and of the second calibrating device, and in that the first and second extrusion sheet dies are arranged so that the extruded cover layers are placed in each case on one of the continuously circulating belts and pass with this into the gap between the webs edges and calibrating devices.

9. Device according to claims 7 or 8, characterised in that the collating device comprises one continuously circulating link chain, the links of which are at least approximately the width of the hollow chamber web to be manufactured, and have guide elements on their outer side, it being possible for the webs to be fixed in a required arrangement by actuating these guide elements.

10. Device according to claim 9, characterised in that the links of the link chain have guide elements which can be pushed transversely to the direction of movement of the chain.

11. Device according to claim 10, characterised in that the links have two opposing groups of guide elements which can be pushed transversely.

Fig. 1

Fig. 2

Fig. 3

Fig. 4

Fig. 5

Fig. 6